# EUROPEAN PATENT APPLICATION

(11) **EP 3 698 966 A1**
(43) Date of publication of application: **26.08.2020**
(21) Application number: 18867987.2
(22) Date of filing: 17.10.2018
(51) Int. Cl.: B32B 27/32, B65D 30/04, B65D 30/14

(54) **BAG- OR SACK-LIKE PACKAGING AND PROCESS FOR MANUFACTURING BAG- OR SACK-LIKE PACKAGING**

(30) Priority: 18.10.2017 BR 102017022412
(71) Applicant: Embrasatec Indústria E Comércio De Embalagens Ltda, 13180-390 Sumaré - SP (BR)
(72) Inventor: FUNARO VIVOLO, Marcelo, 13180-330 Sumaré - SP (BR)
(74) Representative: do Nascimento Gomes, Rui
(86) International application number: PCT/BR2018/050380
(87) International publication number: WO 2019/075538

(57) **Abstract**

The present invention refers to a bag- or sack-type packaging provided with a body (10) made of a polymeric film material and provided with at least one cover (20) comprising, at least in part, raffia, the cover (20) being attached to the body (10) by welding, the packaging thus promoting easy and effective recycling, better palletization and storage and enabling automation of the manufacture process.

## Description

The present invention refers to a bag- or sack-type packaging having a body made of polyethylene or polypropylene film and a raffia cover, particularly applicable in the storage and transport of powdered material, grain, bran, flakes, among other materials, the construction of which prevents the use of glue in its manufacture, hence promoting easy and efficient recycling of the packaging and a final package shape that is favorable to storage and palletization as well as enables automation of its manufacturing process.

The present invention further refers to a process for manufacturing a bag- or sack-type packaging, as above.

### DESCRIPTION OF THE STATE OF THE ART

The package body, which delimits the volume of material to be stored, comprises longitudinal openings that have to be closed to allow the package to be filled with material and to retain the same in its interior. Closure of such openings can be made by sewing or welding their edges, or even gluing closing covers on these openings.

Welded packaging is an improvement over sewn packaging, not only due to advantages in manufacture, but mainly because of the greater resistance to entry of moisture caused particularly by the fact that the packaging wall does not need to be perforated as is the case of sewn packaging.

The use of covers for closing the openings or for other purposes is also a viable option from the point of view of sealing, also having the advantage of providing a shape (usually substantially rectangular) that is suitable for palletization and storage, that is, stacking and transporting packages using pallets, or even for stacking and storing the product itself.

In general, application of raffia covers being welded to sack-type packages having a body made of raffia is already known in the state of the art. However, application of welded covers to sacks having a body made of polyethylene or polypropylene film is still unsolved, particularly concerning welding of raffia covers to a polyethylene or polypropylene film body. In other words, there is still no solution for welding a raffia cover onto a body made of film. It is understood herein that a film is not distinct from raffia, which means that the body of the present invention is free of raffia.

With regard to the industrial scale process, the only solution that currently exists uses the closure with a cover, but which requires glue to be applied on the openings to attach the cover. Unfortunately, the presence of glue prejudices the process of recycling the packages, sometimes reducing recycling efficiency as it requires the disposal of glue-containing packaging parts to avoid contamination of the recycled polymer.

Moreover, still concerning the application of covers to the package, the gluing process imposes difficulties in the automation process due to comprising folding the ends of the package and applying glue to these folds. This fold is a process that requires precision and whose complexity increases greatly with the need to apply glue for bonding the covers, since stability of the folded region is naturally impaired at the time of application. Thus, in addition to the additional cost of the glue, there is also an industrial scale reduction caused by the step of applying the glue.

That being said, packages having welded openings (without cover) also bring issues related to manufacture and use, because their filled shape comprises bulging longitudinal ends that make storage difficult (by stacking, for example) as compared to a rectangular shape , such as that obtained by using a glued cover.

An additional difficulty in the state of the art concerns the fact that it is not yet possible to weld a raffia cover of a material other than that of the film of the body, that is, to weld a raffia cover of polypropylene fabric to a film body containing at least one layer comprising predominantly polyethylene or, alternatively, to weld a raffia cover of polyethylene fabric on a film body containing at least one layer comprising predominantly polypropylene.

Thus, the state of the art does not provide a bag- or sack-type packaging having a body made of polyethylene or polypropylene film and a welded raffia cover that provides concomitantly easy recycling, a shape that facilitates storage and also allows automation of the manufacture process without incurring the problems observed in automation of the application of the cover using glue.

### OBJECTS OF THE INVENTION

A first object of the present invention is to provide a bag- or sack-type packaging having a film body and a cover closure, particularly with a raffia cover.

A second object of the present invention is to provide a bag- or sack-type packaging having a polyethylene film body and a closure with a polyethylene raffia cover, or a polypropylene film body and polypropylene raffia cover closure, or a polyethylene film body and a polypropylene raffia cover closure, or a polyethylene film body and a polypropylene raffia cover closure.

A third object of the present invention is to provide a bag- or sack-type packaging that solves the issue of welding materials having different chemical parities.

A forth object of the present invention is to provide a bag- or sack-type packaging that enables one to weld a raffia cover of a material other than that of the body film, that is, to weld a raffia cover of polypropylene fabric to a film body containing at least one layer comprising predominantly polyethylene or, alternatively, to weld a raffia cover of polyethylene fabric to a film body containing at least one layer comprising predominantly polypropylene.

A fifth object of the present invention is to provide a bag- or sack-type packaging having a film body and a cover closure particularly made of raffia that allows it to be easily and efficiently recycled.

A sixth object of the present invention is to provide a bag- or sack-type packaging that enables easy palletization and storage.

A seventh object of the present invention is to provide a bag- or sack-type packaging whose manufacture can be easily automated.

### BRIEF DESCRIPTION OF THE INVENTION

The present invention refers to a bag- or sack-type packaging provided with a body made of a polymeric material film and provided with at least one cover comprising, at least in part, raffia, the cover being attached to the body by welding.

In particular, the cover comprises an outer layer comprising raffia and at least one inner layer comprising a polymeric material weldable to the body. Alternatively, the packaging can be provided with an intermediate film formed by at least a first and a second layers associated with each other, the first layer comprising a polymeric material weldable to the body and the second layer comprising polymeric material weldable to the cover.

Still particularly, the body film comprises predominantly polyethylene, the raffia of the cover comprises polyethylene, and the inner layer comprises at least in part polyethylene.

Alternatively, the body film comprises predominantly polyethylene, the raffia of the cover comprises polypropylene, the first layer comprises polyethylene, and the second layer comprises a mixture of polyethylene and polypropylene.

The present invention further refers to a process for manufacturing a bag- or sack-type packaging, comprising the steps of:
- laminating a cover comprising raffia; and
- welding the cover on a body.

In particular where the raffia of the cover comprises polypropylene and the body comprises predominantly polyethylene, the process further comprises the steps of:
- welding an intermediate film provided with at least a first and a second layers to the body and the cover.
- welding a first layer comprising polyethylene to the body; and
- welding a second layer comprising at least in part polypropylene to the cover.

### BRIEF DESCRIPTION OF THE DRAWINGS

The present invention will be described in more detail based on an exemplary embodiment represented in the drawings. The figures show:
Figure 1 - is a perspective view of the packaging of the present invention;
Figure 2 - is a perspective view of the packaging of the present invention with one of its ends folded and closed by a cover;
Figure 3 - is a schematic representation of a preferred composition of the packaging cover of the present invention;
Figure 4 - is a schematic representation of a preferred composition of the packaging of the present invention; and
Figure 5 - is a schematic representation of an alternative composition of the packaging of the present invention.

### DETAILED DESCRIPTION OF THE FIGURES

The present invention refers to a bag- or sack-type packaging whose composition of elements allows them to be automatically attached to each other by welding without using glue, giving advantages according to the objects of the invention.

For a better understanding of the present invention, the term "raffia" should be understood as a synthetic compound that forms an interwoven fabric. Commonly, raffia comprises a polyethylene or polypropylene fabric, or even a mixture of both. Nevertheless, the present invention can be carried out using raffia comprising other polymers or polymer mixtures without harming or altering the proposed technical effect.

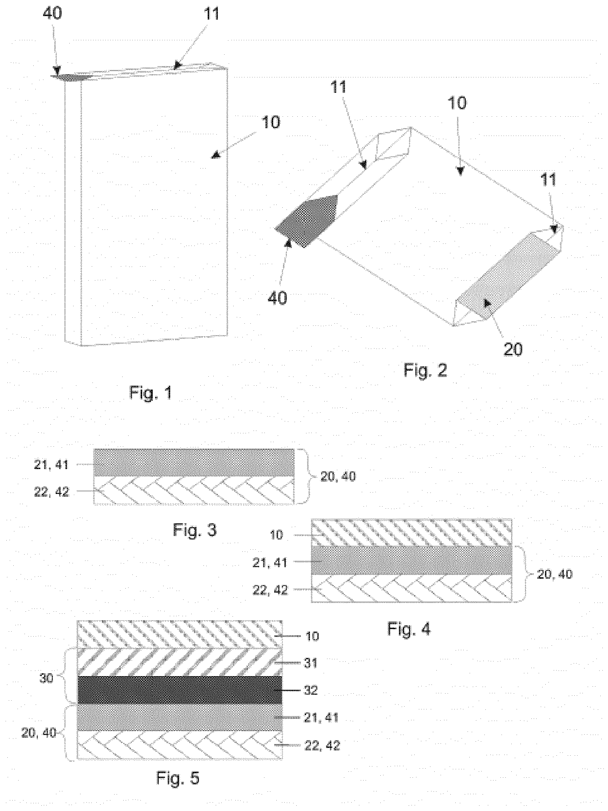

Figures 1 and 2 illustrate the package of the present invention in its preferred upright and lying configurations with folded ends, respectively. The packaging essentially comprises a body 10 formed by a polymeric film and able to receive the material to be stored. Preferably, such a body 10 comprises a thin wall, or film, which delimits an inner region where the material will be stored. The body 10 can comprise a cylindrical, rectangular, or any other shape suitable for receiving and storing material.

Preferably, the body 10 comprises a film of at least one layer of polymeric material that can receive and store material, exhibiting good mechanical strength and imposing no risk of contamination of its contents. In a particular embodiment, the body 10 is composed predominantly of polyethylene.

For a better understanding of the invention, the term "predominantly" should be understood as an amount of polyethylene greater than 50% of the body 10 volume. Polyethylene distribution in the body 10 can be made in various ways, it can be entirely made of polyethylene, or even have one or more "sleeves" (inner layers) made of polyethylene, or even outer polyethylene layers adjacent to layers made of other polymers.

In another particular construction, the body 10 can be composed of more than 60% polyethylene, or even more than 70% polyethylene, or even more than 80% polyethylene, or even more than 90% polyethylene. The greater the minimum polyethylene limit used in the body 10 composition, the greater the body 10 flexibility, thus justifying different limit ranges for applications that require more or less flexibility of the packaging of the present invention.

In another particular embodiment, the body 10 may be composed entirely of polyethylene, or even a mixture of polyethylene and polypropylene. The body 10 can also be comprised of multiple layers forming its film, wherein each layer can also be a mixture of polyethylene, polypropylene or a mixture thereof and can also contain additives. The additives used can be of several types, such as pigments, flow auxiliaries , antioxidants and other materials to aid in the manufacture process and/or to promote better welding performance.

In a particular construction of the present invention, the body 10 can comprise at least one opening 11. In general, such an opening 11 is a result of the manufacture process commonly used to produce sacks, which consists of printing a film of a material that forms the body 10 with the inner region that will receive the material being delimited. As an example, mention can be made of printing a cylinder made of polyethylene/mixture of polyethylene and polypropylene which will thereafter generate a cylindrical packaging. The opening 11 ends can be folded on themselvesas seen in figure 2, to form a preliminary closure and facilitate the final closure, as will be seen below.

Essentially, the package comprises at least one cover 20 made of raffia, the cover 20 being attached to the body 10 by welding. This feature of the invention addresses the problem of the state of the art that the attachment of covers on the package body requires the use of glue for an acceptable attachment, which affects recycling of the packaging. This feature also addresses the issue of the difficulty in automating the process of attaching the cover 20 to the body 10 by gluing due to the complex automation of the application of glue on the fold without impairing its stability. To solve this problem, the present invention provides a cover 20 welded to the body 10.

For a better understanding the present invention, the term "welding" should be understood as the process of joining two polymers by applying heat at their interfaces and subsequently heating to join their surfaces. Heating is carried out until the point of softening of the material to be welded. It should be understood here that welding is different from fusion. In welding the material is adhered in solid state and in fusion the materials are anchored to each other in liquid state and are joined together upon solidification.

Construction of the packaging of the present invention using a cover 20 welded to the body 10 provides an advantageous end "pal-letizable" shape of the packaging (in general, substantially rectangular and suitable for stacking, transport and storage, either on pallets or not) without the need for using glue, thus allowing easy storage and transport and easier and more efficient recycling of the packaging. In addition, the present invention also eliminates the difficulties in automating the process of gluing the cover to the body, allowing automatic welding (a much more stable attachment process) of the cover to the body.

However, welding the cover 20 to the body 10 of the packaging of the invention is not sufficient to achieve the technical effects proposed by the invention. If a cover 20 made of a polymer film is welded against a body 10 also made of a polymer film, several problems arise depending on the material used. For example, in more flexible polymers (such as polyethylene) having low weldability (ease of performing the welding operation), as they comprise, for example, a very low softening temperature and welding of a thin film cover over the fold results in deformation (wrinkling) of the cover resulting in poor closure.

On the other hand, the use of polymers having greater weldability (such as polypropylene) in general does not meet the strength and flexibility requirements of a sack-type packaging, that is, the final packaging cannot be used in many of the required applications for this type of packaging, such as transporting heavy weights and constant handling by people and machines.

Thus, the packaging of the present invention further comprises the cover 20 being composed of raffia. Raffia fabric has an interwoven structure that provides it with greater weldability, even though raffia is composed of materials that originally exhibit low weldability, such as polyethylene. Thus, the cover 20 can be welded to the body 10 film without deforming said cover 20.

Thus, the cover 20 made of raffia and welded to a body 10 formed by a film of polymeric material provides a packaging that does not require the use of glue, can be easily manufactured in an automated manner, the cover can be welded to the body without being deformed, and has a favorable shape for storage and palletization.

In a particular construction of the package, as seen in figure 2, the covers 20 can be welded to one or both longitudinal ends of the body 10 where the openings 11 are located to allow closure of the package, even though the cover can be attached to other regions of the body 10. In particular, the cover 20 is attached to the body 10 at each of its longitudinal ends, over the openings 11. In a possible embodiment of the body 10, more than one cover 20 is attached to tbe body 10 to cover multiple regions of interest, such as, for example, one cover 20 for each of the openings 11.

In a preferred embodiment of the cover 20 of the present invention, shown in figure 3, the cover 20 comprises an inner layer 21 and an outer layer 22. For a better understanding of the cover 20 construction in such a preferred embodiment, the inner layer 21 consists of the layer that is in contact with and is welded to the body 10 film, while the outer layer 22 is the one facing the external environment and is arranged on the opposite side with respect to the inner layer 21.

The outer layer 22 is particularly composed at least partially of raffia, and the inner layer 21 is composed of any polymer material, or a mixture of polymeric materials. Preferably, the inner layer 21 is a lamination layer, which aids in welding the cover 20 to the body 10. The inner lamination layer 21 can be applied to the outer raffia layer 22 by means of a polymeric lamination process, where a melted polymer is drained over the outer raffia layer 22 forming the inner layer 21. In particular, the lamination layer is composed of the same polymeric material as the inner layer 21, and it can also be a mixture of polypropylene or polyethylene, or even polyethylene alone, polypropylene alone or other materials such as EVA (ethylene and vinyl acetate copolymer).

Figure 4 shows a preferred embodiment of the attachment between the cover 20 and the body 10. The inner layer 21 is arranged adjacent the body 10. In this preferred embodiment, the inner layer 21 of the cover 20 is the one that will be welded to the body 10 and, therefore, there must be chemical parity between the layer 21 and body 10 materials to enable welding attachment. As previously explained, the body 10 is preferably composed of a film made predominantly of polyethylene, such that layer 21 should preferably comprise polyethylene. In this preferred embodiment, the raffia cover 20 comprises polyethylene in order to enable chemical parity between the inner and outer layers 21, 22 during the lamination process.

In an alternative embodiment of the present invention shown in figure 5, the package comprises an intermediate film 30 provided with at least a first and a second layers 31, 32. This alternative embodiment is particularly applicable in instances where the raffia cover 20 is composed of a material that does not exhibit chemical parity with the body 10 material, and in such an instance, even using the laminated inner layer 21, a reliable welding attachment would not be possible.

Thus, the intermediate film 30 acts to aid in chemical parity between the the cover 20 and body 10 materials, the first layer 31 being weldable to the body 10 and the second layer being weldable to the cover 20. More particularly, the second layer 20 is weldable to the inner layer 21 of the cover 20.

More particularly, preferably, but not obligatorily, the intermediate film 30 comprises a thickness ratio of 20%, 80%, respectively, relative to the sum of thicknesses of these two layers. Even more particularly, the inner layer comprises, preferably, but not obligatorily, a ratio of 15% to 40% polyethylene and 60% to 85% polypropylene or vice versa depending on the film material of the sack body.

In a possible construction of this alternative embodiment, the outer 22 and inner 21 layers of the cover 20 are composed of polypropylene raffia and polypropylene, respectively, and the body 10 is predominantly composed of polyethylene. The intermediate film 30 is then formed by a first layer 31 made of polyethylene, allowing it to be welded to the body 10, and the second layer 32 is composed of polypropylene or a mixture of polyethylene and polypropylene, which allows it to be welded to the inner layer 21 of the cover 20. Welding the intermediate film 30 to the body 10 and the cover 20 provides a package that achieves the objects proposed by the present invention, even when the cover 20 and body 10 materials do not exhibit chemical parity.

It is further clarified that the cover 20 of the present invention may comprise any number of inner layers 21 with any composition of polypropylene, polyethylene or a mixture thereof, depending only on the intended application, provided that the arrangement and composition of the layers allow the attachment of the cover 20 to the body 10, either using the intermediate film 30 or not.

In addition, the intermediate film 30 can also comprise any number of layers, not just a first and a second layers. The number of layers of the intermediate film 30 will depend on the type of intended application and on other functions to be fulfilled thereby, besides enabling welding between the cover 20 and the body 10, such as the function of filling the packaging film or thermal insulation. For such functions, additional layers can be used in the intermediate film without affecting its proposed function.

In a particular embodiment of the present invention, the body 10 is attached to a valve 30. As seen in figures 1 and 2, the valve 30 is attached to the body 10 through one of its openings 11, and is intended to allow the filling and subsequent closing of the package.

In particular, the valve 30 comprises raffia and is welded to the body 10, achieving the same benefits of welding the raffia cover 20 onto the body 10. In this case, the valve 40 must have a composition that would allow it to be welded to the body 10, either using an intermediate film 30 or not, as is done for the cover 20. In a possible construction, the valve 40 may comprise an outer layer 42 composed of raffia and an inner layer 41 composed of a polymer weldable to the body 10, or to one of the intermediate film 30 layers. As with the cover 20, the valve 40 can be composed of multiple inner layers depending on the desired application.

The layer arrangement shown in figures 3, 4 and 5 can be applied not only to the cover 20, but also to the valve 40. According to the preferred embodiment of the body 10 composed predominantly of polyethylene, the inner 41 and outer 42 layers of the valve 40 are composed of polyethylene and polyethylene raffia, respectively. In an alternative embodiment where the raffia valve 40 comprises a material exhibiting no chemical parity with the body 10 material, an intermediate film 30 is used, having a first layer 31 of a material weldable to the body 10 and a second layer 32 of a material weldable to the inner layer 41 of the valve 40.

In accordance with the bag- or sack-type packaging described above, the present invention also refers to a process for the manufacture of this packaging, essentially comprising the steps of:
- laminating a cover 20 comprising raffia; and
- welding the cover 20 on a body 10.

Lamination of the cover 20 composed of raffia consists of adding the inner layer 21 by polymeric lamination, as previously discussed. Welding of the cover 20 to the body 10 is carried out by heating the region between the body 10 and the cover 20 and subsequently arranging them in contact with each other. Also, as already discussed, such welding process can be automated.

For instances where the cover 20 comprises a material having no chemical parity with the body 10 material, the process can particularly further comprise the following step:
- welding an intermediate film 30 provided with at least a first and a second layers 31, 32 to the body 10 and the cover 20.

Even more particularly, the process further comprises the following steps:
- welding a first layer 31 comprising polyethylene to the body 10;
- welding a second layer 32 comprising at least in part polypropylene to the cover 20.

The aforementioned process further comprises the characteristics of the already described materials, such as the fact that the intermediate film 30 comprises a thickness ratio of 20%, 80%, respectively, relative to the sum of thicknesses of both layers. Even more particularly, the inner layer comprises, preferably, but not obligatorily, a ratio of 15% to 40% polyethylene and 60% to 85% polypropylene or vice versa depending on the film material of the sack body.

Having described a preferred exemplary embodiment, it should be understood that the scope of the present invention covers other possible variations, being limited only by the content of the appended claims, including possible equivalents thereof.

## Claims

1. A bag- or sack-type packaging provided with a body (10) made of a polymeric material film, the packaging being **characterized by** being provided with at least one cover (20) comprising, at least in part, raffia, the cover (20) being attached to the body (10) by welding.

2. The bag- or sack-type packaging according to claim 1, **characterized in that** the cover (20) comprises an outer layer (22) composed of raffia and at least one inner layer (21) composed of a polymeric material weldable to the body (10).

3. The bag- or sack-type packaging according to claim 1, **characterized in that** it is provided with an intermediate film (30) formed by at least a first and a second layers (31, 32) attached to each other, the first layer (31) comprising a polymeric material weldable to the body (10) and the second layer comprising polymeric material weldable to the cover (20).

4. The bag- or sack-type packaging according to claim 1, **characterized in that** the body (10) film is composed predominantly of polyethylene, the raffia in the cover (20) being composed of polyethylene.

5. The bag- or sack-type packaging according to claims 2 and 4, **characterized in that** the inner layer (21) is composed at least partially of polyethylene.

6. The bag- or sack-type packaging according to claim 1, **characterized in that** the body (10) film is composed predominantly of polyethylene, the raffia of the cover (20) being composed of polypropylene.

7. The bag- or sack-type packaging according to claims 3 and 6, **characterized in that** the first layer (31) is composed of polyethylene, the second layer (32) comprising a mixture of polyethylene and polypropylene.

8. A process for manufacturing a bag- or sack-type packaging as defined in claim 1, **characterized in that** it comprises the steps of:
- laminating a cover (20) comprising raffia; and
- welding the cover (20) on a body (10).

9. The process for manufacturing a bag- or sack-type packaging according to claim 8, where the raffia of the cover (20) comprises polypropylene and the body (10) comprises predominantly polyethylene, the process being **characterized in that** it further comprises the step of:
- welding an intermediate film (30) provided with at least a first and a second layers (31, 32) to the body (10) and the cover (20).

10. A process for manufacturing the bag- or sack-type packaging according to claim 9, **characterized in that** it further comprises the steps of:
- welding a first layer (31) comprising polyethylene to the body (10); and
- welding a second layer (32) comprising at least in part polypropylene to the cover (20).
